(19) **Europäisches Patentamt / European Patent Office / Office européen des brevets**

(11) **EP 3 160 642 B1**

(12) **FASCICULE DE BREVET EUROPEEN**

(45) Date de publication et mention
de la délivrance du brevet:
**18.04.2018 Bulletin 2018/16**

(21) Numéro de dépôt: **15733672.8**

(22) Date de dépôt: **24.06.2015**

(51) Int Cl.:
**B01J 37/02** (2006.01)   **B01J 23/882** (2006.01)
**B01J 33/00** (2006.01)

(86) Numéro de dépôt international:
**PCT/EP2015/064288**

(87) Numéro de publication internationale:
**WO 2015/197712 (30.12.2015 Gazette 2015/52)**

(54) **PROCÉDÉ POUR LIMITER L'ÉMISSION DE POUSSIÈRES À PARTIR DE GRAINS DE CATALYSEURS**

VERFAHREN ZUR BEGRENZUNG DER EMISSION VON STAUB AUS KATALYSATORKÖRNERN

METHOD FOR LIMITING THE EMISSION OF DUST FROM CATALYST GRAINS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.06.2014 FR 1456017**

(43) Date de publication de la demande:
**03.05.2017 Bulletin 2017/18**

(73) Titulaire: **Eurecat S.A.**
**07800 La Voulte-sur-Rhône (FR)**

(72) Inventeurs:
• **GALLIOU, Pauline**
**F-07800 Saint Laurent du Pape (FR)**

• **DUFRESNE, Pierre**
**F-26400 Aouste sur Sye (FR)**
• **BAFFERT, Mathieu**
**F-07500 Guilherand Granges (FR)**
• **ITALIANO, Giuseppe**
**I-98040 Olivarella (Me) (IT)**

(74) Mandataire: **Casalonga**
**Casalonga & Partners**
**Bayerstraße 71/73**
**80335 München (DE)**

(56) Documents cités:
**EP-A1- 0 897 748    EP-A1- 2 000 206**

**Description**

La présente invention concerne un procédé visant en particulier à limiter les poussières émises lors de leur manipulation par les catalyseurs se présentant sous forme de grains.

Les catalyseurs concernés sont par exemple, mais non limitativement, ceux employés dans des procédés de traitements d'hydrocarbures, en particulier dans les domaines du raffinage pétrolier, de la pétrochimie et de la chimie, en particulier les procédés de conversion de composés hydrocarbonés.

Les procédés de traitement des hydrocarbures effectués dans les raffineries et/ou les unités de pétrochimie incluent un certain nombre de traitements essentiellement destinés à modifier la structure des molécules d'hydrocarbures et/ou à éliminer des coupes hydrocarbonées des composés indésirables tels que notamment les composés soufrés, azotés, aromatiques, métalliques. Peuvent être cités, à titre d'exemples non limitatifs, les procédés de réformage de naphta, d'hydrogénation, d'hydrocraquage et les procédés dits d'hydrotraitement tels que les procédés d'hydrodésulfuration, d'hydrodéazotation, d'hydrodéoxygénation, d'hydrodéaromatisation, d'hydrodémétallation.

Les catalyseurs concernés peuvent aussi traiter des composés gazeux. Ainsi la présente invention s'applique également à l'ensemble des catalyseurs employés dans la chaîne de production d'hydrogène et d'ammoniac, dont l'étape de vaporeformage (steam reforming), ainsi qu'aux catalyseurs employés dans la chaîne Soufre (catalyseurs Claus et gaz de queue - tail gas), l'ensemble des catalyseurs d'oxydation, de déshydrogénation, d'ammoxidation.

Parmi les procédés susceptibles de mettre en oeuvre des catalyseurs, certains sont réalisés en présence d'hydrogène, et sont usuellement désignés sous le terme générique de procédés d'hydroconversion.

La plupart des procédés ci-avant font appel à des catalyseurs solides qui se présentent sous forme de particules également dénommées « grains de catalyseurs ». Ces grains de catalyseurs comprennent un support poreux à base d'un ou plusieurs oxydes inorganiques réfractaires, sur lequel sont déposés un ou plusieurs métaux catalytiquement actifs, choisis parmi les métaux du groupe VIII de la classification périodique des éléments et les métaux du groupe VIB de la classification périodique des éléments.

La cinétique des réactions de traitement d'hydrocarbures est en particulier limitée par la vitesse de diffusion des molécules d'hydrocarbures (souvent de taille importante) vers les sites catalytiques situés dans les pores du catalyseur. Ainsi, les sites catalytiques doivent être les plus accessibles possibles. C'est pourquoi les fabricants s'efforcent de préparer des catalyseurs présentant une surface spécifique et une porosité la plus importante possible, ce qui conduit à des catalyseurs sous forme de grains de très petite taille.

Cependant, la taille des grains de catalyseur ne doit pas non plus être trop petite, car cela conduit à une augmentation de la perte de charge (Delta P) dans le réacteur de traitement d'hydrocarbures lors de son fonctionnement.

Ainsi, les fabricants doivent faire face à deux contraintes contradictoires : plus les grains de catalyseurs sont de petite taille plus les performances catalytiques sont importantes, mais plus la perte de charge dans le réacteur est élevée.

Ainsi, les catalyseurs intervenant dans ce type de procédés se présentent le plus souvent sous forme de grains de forme cylindrique ou multilobes présentant un diamètre moyen allant généralement de 0,8 à 4 mm et une longueur moyenne allant généralement de 2,5 à 5 mm. Dans certaines applications, des grains de forme sphériques sont utilisés, dont le diamètre varie en général de 1,5 à 5 mm.

Une contrainte supplémentaire intervenant dans les procédés mettant en oeuvre des grains de catalyseur concerne la résistance mécanique desdits grains. Celle-ci est d'autant plus faible que la porosité et la surface spécifique des grains de catalyseur sont importantes.

Cependant, les opérations de manipulation des catalyseurs notamment à l'occasion de leur transport et de leur chargement dans les réacteurs engendrent des phénomènes de frottement des grains entre eux ou contre des parois qui provoquent la formation de "fines" c'est-à-dire de poussières. Ces forces de frottement provoquent également des phénomènes d'attrition des grains, c'est-à-dire une usure mécanique de celles-ci par frottement, choc et/ou écrasement, qui se traduisent par une casse des particules et une diminution non souhaitée de leur taille.

Or, la formation de quantités importantes de poussières de catalyseur pose plusieurs problèmes. D'une part, elle complique substantiellement les opérations de chargement des grains, dans la mesure où le volume important de poussières empêche de contrôler visuellement l'évolution du chargement, et il est donc nécessaire de stopper à intervalles réguliers les opérations de chargement de manière à laisser retomber le nuage de poussière pour pouvoir s'assurer que les grains de catalyseur sont correctement distribués, de manière homogène, dans le réacteur.

En outre, la formation de telles poussières pose des problèmes de sécurité, d'une part pour les opérateurs chargés de la manipulation des grains, mais également pour toutes les personnes présentes sur le site industriel. Ces poussières sont susceptibles de s'envoler et d'être entraînées dans l'atmosphère sur des distances parfois assez grandes, causant un risque additionnel pour les habitants et l'environnement alentour.

En effet, les poussières sont constituées de particules ayant des répartitions granulométriques généralement larges, qui vont de particules de taille millimétrique, à des particules de taille micrométrique, jusqu'à éventuellement une taille nanométrique.

Les poussières de taille millimétriques ont des tailles inférieures à 1mm ou le plus souvent à 0,8mm.

La classe suivante des particules de tailles micrométriques fait l'objet d'attentions particulières en ce qui concerne les particules les plus petites, en raison de leur caractère de toxicité. Elles sont classifiées en fonction de leur taille (cf par exemple les normes EN 12341 et ISO 10473:2000). On distingue :

- les particules dénommées $PM_{10}$ (taille inférieure à 10 microns),
- les particules dites $PM_{2,5}$ (taille inférieure à 2,5 microns), et
- les particules dites $PM_{1,0}$ (taille inférieure à 1 micron).

Ces particules peuvent rester en suspension dans l'air pendant des durées allant de un jour à une semaine. En dessous d'une taille de 2,5 microns, les particules sont susceptibles d'atteindre les alvéoles pulmonaires par inhalation. D'une manière générale, il y a un contrôle strict d'exposition des populations aux particules $PM_{10}$ et inférieures, pour des raisons de santé publique.

Un phénomène encore aggravant par rapport à l'aspect HSE (hygiène/sécurité/environnement) est l'incertitude aujourd'hui liée à la présence de matériaux de taille nanométrique. Le terme nanomatériaux désigne des composés comprenant des particules de taille inférieure à 100 nanomètres (soit inférieure à 0,1 micron). Le sujet de la classification des catalyseurs en tant que nanomatériaux est actuellement débattu à différents niveaux dans l'Union Européenne. Il est certain que les catalyseurs ont par essence des phases actives qui sont en général dispersées à l'échelle nanométrique, que ce soit des phases actives à base de métal précieux ou à base de métaux non nobles des groupes VI et VIII de la classification périodique. D'autre part, les supports de ces catalyseurs sont conçus pour présenter des porosités de taille nanométrique avec souvent des diamètres de pores compris entre 5 et 50 nanomètres.

Un effet aggravant pour les éventuelles conséquences sur la santé est que les catalyseurs contiennent souvent des éléments métalliques comme par exemple le cobalt et le nickel. Ces éléments sont de plus en plus cités pour leur toxicité. Ainsi, les catalyseurs d'hydrotraitement par exemple, qui contiennent les éléments cobalt, nickel, molybdène, tungstène, posent un problème environnemental de par la génération de poussières. Plus précisément, les catalyseurs d'hydrotraitement contiennent environ de 2 à 5% en poids d'oxydes de cobalt ou de nickel ; les catalyseurs d'hydrogénation peuvent contenir de 10 à 50% en poids de nickel.

Au-delà de la nécessité de limiter les émissions de poussières pour des raisons d'Hygiène Sécurité Environnement, il y existe aussi un intérêt au niveau du confort des conditions de travail pour le personnel chargé de manipuler ces catalyseurs. Ces produits émettent des poussières lesquelles, au-delà de leur toxicité éventuelle, provoquent des salissures de leur environnement.

Enfin, à l'intérieur des réacteurs, ces phénomènes de création de poussières de taille millimétrique et micrométriques ont des effets indésirables pour le bon fonctionnement des réacteurs : ils entraînent en particulier une augmentation significative de la perte de charge, laquelle est nuisible au bon passage des fluides liquides ou gazeux à travers le lit de catalyseur. Les arrêts d'unités pour perte de charge sont une des principales causes d'arrêt intempestif des réacteurs en raffinerie/pétrochimie. Donc, toute mesure susceptible de contribuer à diminuer l'occurrence de pertes de charges est extrêmement précieuse.

Ainsi, pour toutes les raisons développées ci-avant, il est souhaitable de diminuer autant que possible, voire de faire complètement disparaître les phénomènes d'émission de poussières à partir des grains de catalyseurs, qui se produisent d'une manière générale lors de leur manipulation et leur transport, et en particulier lors de leur chargement dans les réacteurs dans lesquels ils sont mis en oeuvre industriellement.

Des solutions ont été proposées par les fabricants de catalyseurs, et qui visent essentiellement à augmenter la résistance mécanique des grains de catalyseur par différents moyens.

Une solution consiste à augmenter la taille des grains, mais ceci se fait le plus souvent au détriment de l'activité du catalyseur.

D'autres solutions ont été proposées dans l'art antérieur, afin d'augmenter la résistance mécanique des grains de catalyseur.

Ainsi, le brevet US 2,976,253 décrit une méthode pour éviter l'attrition des catalyseurs au cours de leur manipulation, et prévenir la perte de charge qui en résulte dans les réacteurs, qui consiste à enrober chaque grain de catalyseur d'un film de polymère résineux obtenu à partir de mono-oléfines en $C_2$ à $C_8$ qui s'élimine ensuite au cours de l'utilisation du catalyseur. L'épaisseur du film polymérique sur les grains de catalyseur va de 25 à 100 $\mu$m.

La demande de brevet EP 2 000 206 concerne la protection de catalyseurs destinés à la synthèse Fischer-Tropsch, et propose de les renforcer en leur ajoutant une ou plusieurs cires. La cire employée est présente également à l'intérieur des pores du catalyseur, et ce document ne décrit pas un enrobage externe des particules de catalyseur.

D'autres documents tels que US 4,526,877 et US 5,302,566 proposent de protéger le catalyseur au moyen d'un enrobage permanent. La demande de brevet EP 0 897 748 concerne la protection de catalyseurs par dépôt de couche protectrice. Si les solutions proposées dans l'art antérieur permettent pour la plupart de réduire l'attrition et la formation de poussières lors du chargement des catalyseurs, la Demanderesse a toutefois constaté qu'elles engendraient des problèmes supplémentaires.

En effet, la matière protectrice présente en couche relativement épaisse en surface externe des grains de catalyseur provoque deux inconvénients majeurs.

Le premier inconvénient est que la place occupée par cette couche augmente sensiblement le diamètre effectif du grain, donc le volume occupé par chaque grain. Le volume du réacteur à charger, nécessairement limité, est donc dans le cas d'un catalyseur enrobé partiellement occupé par la matière protectrice, et ce d'autant plus que l'épaisseur de la couche de catalyseur est importante. Les performances d'un lit de catalyseur étant proportionnelles à la quantité de matière active, elles peuvent donc être significativement diminuées si la couche d'enrobage est trop importante, ce qui n'est pas tolérable. De plus, lors de l'élimination de la couche, le volume occupé par celle-ci est libéré. Si ce volume occupé est important, le lit de catalyseur va se modifier, ce qui est susceptible de générer des chemins préférentiels pour la charge circulant au travers du lit, ce qui est contraire aux exigences d'une parfaite distribution de la charge au travers du lit de catalyseur dans le réacteur, et s'avère particulièrement préjudiciable pour les performances de l'unité.

Le second inconvénient est une difficulté d'élimination de la couche de matière protectrice lors de la phase de démarrage de l'unité. Cette matière peut être éliminée par exemple par fusion, ou par dissolution au sein de la charge, et cette matière est alors entraînée dans le circuit aval du réacteur, les trains d'échanges, les séparateurs fonctionnant à haute ou basse pression, etc... Il existe un risque non négligeable que la matière protectrice se dépose en un ou plusieurs points du circuit aval, ce qui peut limiter l'efficacité des équipements de traitement aval voire risque de bloquer certains d'entre eux. Plus la quantité de matière protectrice est importante, plus grand est le risque.

Ainsi, la Demanderesse a constaté que dans les cas où le catalyseur comprend en quantité substantielle un matériau protecteur destiné à s'éliminer dans le réacteur, cela donne lieu à des dépôts importants de la matière protectrice, plus ou moins décomposée, en aval du réacteur. Ainsi par exemple les paraffines et cires de polyéthylène employées dans ces techniques sont généralement peu solubles dans les hydrocarbures à relativement basse température, ce qui conduit à des dépôts indésirables, notamment dans les échangeurs de chaleur en sortie du réacteur. Ainsi par exemple pour un lit catalytique de 70t recouvert d'une couche protectrice de 3% en poids de cire, l'élimination de la couche protectrice conduit à devoir éliminer de l'ordre de 2t de cire, ce qui complique substantiellement le procédé.

Enfin, des problèmes supplémentaires peuvent apparaître lorsque du matériau protecteur est présent dans la porosité du catalyseur. Dans ce cas, l'élimination complète du matériau protecteur est d'autant plus difficile, ce qui peut conduire à une perte d'activité du catalyseur lorsque ce matériau n'est pas complètement éliminé des pores.

La présente invention vise à proposer une méthode améliorée pour limiter l'émission de poussières lors de la manipulation de catalyseurs sous forme de grains, tout en permettant de remédier aux inconvénients des méthodes de l'art antérieur.

Le but de l'invention n'est donc pas de renforcer en soi la tenue mécanique des grains de catalyseur, mais de diminuer très significativement la formation de poussières, et en particulier de particules fines, de taille micrométrique.

L'invention s'applique en particulier à des grains de catalyseur qui présentent une résistance mécanique satisfaisante, notamment une bonne résistance à la rupture et à l'écrasement, mais qui génèrent des poussières fines lors de leur manipulation.

La Demanderesse a découvert que cet objectif était atteint au moyen d'un procédé dans lequel les grains de catalyseur sont, directement à la suite d'un traitement thermique, mis en contact avec un matériau d'enrobage solide, dans des conditions de température particulières.

Ainsi, la présente invention a pour objet un procédé pour limiter l'émission de poussières à partir de grains de catalyseurs, comprenant les deux étapes consécutives suivantes :

- une première étape consistant à effectuer un traitement thermique des grains de catalyseur à une température supérieure ou égale à 100°C, suivie de
- une seconde étape consistant à effectuer un enrobage de la surface des grains de catalyseur, par mise en contact de ceux-ci avec un ou plusieurs matériaux d'enrobage ayant un point de fusion T supérieur ou égal à 45°C et qui sont introduits à l'état solide,

ladite seconde étape étant effectuée sans nouvel apport de chaleur, à une température allant de T - 60°C à T - 1°C, tout en restant supérieure ou égale à 40°C.

Ainsi, l'invention consiste à effectuer un traitement thermique du catalyseur, suivi d'une étape d'enrobage au moyen d'un matériau introduit à l'état solide, la mise en contact du catalyseur et dudit matériau ayant lieu à une température inférieure de 1 à 60°C par rapport à la température T de fusion dudit matériau.

Cette deuxième étape est effectuée sans apport complémentaire de chaleur, la chaleur nécessaire pour que s'effectue l'enrobage étant uniquement apportée par le catalyseur chaud issu de la première étape.

Ces conditions permettent un enrobage de la surface des grains de catalyseur sans que le matériau ne pénètre dans les pores de celui-ci.

Le procédé selon l'invention permet de diminuer de manière très importante la formation de poussières, notamment celles contenant des particules de taille micrométrique, lors des opérations de manipulation des catalyseurs, et en particulier lors de leur chargement dans les réacteurs des unités industrielles. Il rend la manipulation de ces catalyseurs plus aisée pour les opérateurs, et diminue les risques pour ces derniers, et pour l'environnement, induits par la présence de particules de très petite taille.

En outre, la Demanderesse a découvert que le procédé selon l'invention permettait de préserver une très bonne efficacité des unités, sans perte d'activité substantielle résultant du chargement de grains de catalyseur sous forme enrobée.

En effet, le procédé selon l'invention s'est avéré particulièrement efficace même en employant de très faibles quantités de matériaux d'enrobage. Il permet d'obtenir à la surface du catalyseur des couches d'enrobage particulièrement fines. Ceci permet de préserver une bonne densité de chargement des réacteurs, et de diminuer de manière importante les problèmes liés à l'élimination de quantités importantes de matériau protecteur.

Par ailleurs, la couche de matériau selon l'invention s'élimine de manière d'autant plus rapide et efficace (par exemple au contact de la charge lors du démarrage de l'unité dans laquelle est mis en oeuvre le catalyseur) que la couche d'enrobage n'est que superficielle, et que le matériau d'enrobage n'a pas pénétré dans les pores du catalyseur. Ceci permet à la charge à traiter d'accéder rapidement à l'ensemble des sites actifs du catalyseur.

Par « charge », on désigne de préférence des coupes d'hydrocarbures ayant, typiquement, une gamme d'ébullition à pression atmosphérique comprise dans la plage allant de 75 à 650°C pouvant être mises en contact avec le catalyseur à l'état liquide ou gazeux. Le terme « charge » peut également désigner divers composés gazeux comme, à titre d'exemples non limitatifs, l'oxygène, l'azote, l'eau, le monoxyde de carbone, le méthane, l'ammoniac, le sulfure d'hydrogène, le dioxyde de soufre, etc.

Le procédé selon la présente invention peut s'appliquer à tout catalyseur solide sous forme de grains, par exemple, mais non limitativement, les catalyseurs destinés au traitement des charges hydrocarbures notamment dans les domaines du raffinage pétrolier et de la pétrochimie.

Il s'applique tout particulièrement aux catalyseurs d'hydroconversion d'hydrocarbures. Ces catalyseurs sous forme de grains comprennent un support poreux d'oxyde réfractaire sur lequel est déposé au moins un métal choisi parmi les métaux du groupe VIII et les métaux du groupe VIB.

De préférence, les catalyseurs contiennent au moins un métal du groupe VIII de la classification périodique des éléments, tel que par exemple le cobalt, le nickel, le fer, le palladium, le platine. Ces métaux peuvent être associés à au moins un métal du groupe VIB tel que par exemple le molybdène, le tungstène, le chrome. La teneur en métal ou métaux du groupe VIII est généralement comprise entre 0,1 et 20% en poids par rapport au poids total du catalyseur non enrobé, parfois jusqu'à 50%. La teneur en métal ou métaux du groupe VIB est généralement comprise entre 3 et 30% en poids par rapport au poids total du catalyseur (sous forme non enrobée).

De préférence, le support des catalyseurs est choisi parmi les alumines, les silices, les silice-alumines amorphes ou cristallisées (zéolithes). Plus préférentiellement, le support contient au moins 30% en poids, et mieux encore au moins 50% en poids, d'alumine.

Le procédé selon l'invention est particulièrement approprié pour traiter des catalyseurs contenant les associations métalliques CoMo, NiMo, NiW, NiCoMo, déposées sur des supports à base d'alumine.

Ces catalyseurs peuvent contenir un ou plusieurs additifs tels que des additifs organiques, des composés halogénés, borés, phosphorés.

Ces catalyseurs se présentent sous la forme de grains de forme préférentiellement sphérique, cylindrique, ou multilobes.

L'invention s'applique tout particulièrement à des grains de catalyseur dont la dimension moyenne maximale en nombre va de 1 à 10 mm, de préférence de 2 à 5 mm.

La dimension moyenne maximale en nombre des grains de catalyseur peut être déterminée par des méthodes bien connues de l'homme du métier, et notamment par vidéo-granulométrie, ou à l'aide d'un pied à coulisse. On peut typiquement utiliser le vidéo-granulomètre CAMSIZER, développé par la société RETSCH.

Les catalyseurs employés dans l'invention présentent typiquement une surface spécifique, mesurée par la méthode BET, allant de 100 à 300 $m^2$/g, un volume poreux, déterminé par adsorption d'azote, allant de 0,20 à 1 ml/g, et un diamètre de pores moyen, déterminé par adsorption d'azote, allant de 7 à 20 nm.

Le procédé selon la présente invention s'applique tant à des catalyseurs neufs, c'est-à-dire des catalyseurs qui n'ont encore jamais été employés, qu'à des catalyseurs régénérés, c'est-à-dire des catalyseurs usés qui ont été régénérés afin de les débarrasser de leurs résidus carbonés (coke) et leur restituer un niveau d'activité permettant de les réutiliser. Le procédé de régénération peut en particulier être réalisé en deux étapes, une première étape de combustion du coke, et une deuxième étape consistant en une imprégnation du catalyseur par un ou plusieurs additifs, notamment organiques, suivie d'un séchage. Cette deuxième étape est parfois appelée « réjuvénation ».

Selon un mode de réalisation préféré, le procédé selon la présente invention est effectué en continu.

De préférence, la seconde étape suit immédiatement la première, c'est-à-dire que les deux étapes selon l'invention s'enchaînent sans interruption, en particulier sans étape de traitement supplémentaire entre ces deux étapes.

A noter qu'un éventuel convoyage (ou transport) du catalyseur entre les enceintes ou dispositifs dans lesquelles sont effectuées les deux étapes n'est pas considéré comme constituant un traitement supplémentaire.

De même, un éventuel refroidissement du catalyseur entre les deux étapes n'est pas considéré comme constituant un traitement supplémentaire. Un tel refroidissement, qui peut être actif ou passif (c'est-à-dire qu'on laisse tout simplement diminuer la température du catalyseur) peut s'avérer nécessaire lorsque la température du catalyseur à l'issue de la première étape est supérieure à T - 1°C, avec T le point de fusion du matériau d'enrobage. Le refroidissement peut être obtenu du simple fait du convoyage du catalyseur entre les deux étapes comme évoqué ci-avant.

Dans un mode de mise en oeuvre particulièrement préféré, ladite seconde étape est effectuée sur un système de lit mobile non chauffé, alimenté en continu par le catalyseur directement issu de la première étape d'une part, et par le ou les matériau(x) d'enrobage d'autre part.

La première étape du procédé selon l'invention consiste en un traitement thermique des grains de catalyseur à une température supérieure ou égale à 100°C.

De préférence, cette première étape est effectuée à une température allant de 120 à 650°C, plus préférentiellement de 150 à 550°C, et mieux encore de 200 à 500°C.

Par « traitement thermique », on désigne selon l'invention tout traitement du catalyseur consistant à chauffer celui-ci, ou comprenant un chauffage du catalyseur.

Ainsi, ladite première étape peut consister en un simple chauffage du catalyseur.

La première étape peut également consister en un traitement de séchage, ou un traitement de calcination du catalyseur, effectué par exemple à la fin du procédé de fabrication dudit catalyseur.

Ce mode de réalisation est particulièrement avantageux, car il permet d'intégrer le procédé selon l'invention à un procédé classique de fabrication de catalyseur, la dernière étape du procédé de fabrication étant aussi la première étape du procédé selon l'invention. L'on obtient ainsi directement un catalyseur neuf à l'état protégé.

Ceci permet également de récupérer de manière avantageuse la chaleur apportée lors traitement thermique effectué en fin de préparation du catalyseur, et de l'utiliser pour la protection du catalyseur.

La première étape du procédé selon l'invention peut également consister en un traitement de régénération du catalyseur, dans le cas d'un catalyseur usé.

En effet, les catalyseurs usés sont généralement régénérés par un traitement thermique, destiné à éliminer les contaminants (hydrocarbures lourds, coke ou autres impuretés) présents à la surface et dans les pores des grains de catalyseur.

Dans les cas où la régénération comporte une deuxième étape (souvent appelée réjuvénation), consistant à déposer un ou plusieurs additifs, notamment organiques, dans la porosité des grains de catalyseur, suivie d'un séchage, la première étape du procédé selon l'invention peut avantageusement correspondre à cette étape de séchage.

Ce mode de réalisation est également très avantageux, car il permet d'intégrer le procédé selon l'invention à un procédé classique de régénération de catalyseur, la dernière étape du procédé de régénération étant aussi la première étape du procédé selon l'invention. L'on obtient ainsi directement un catalyseur régénéré, à l'état protégé.

Ceci permet également de récupérer de manière avantageuse la chaleur apportée lors du traitement thermique effectué pour les besoins de la régénération, et de l'utiliser pour la protection du catalyseur.

Comme exposé ci-avant, la seconde étape du procédé selon l'invention est effectuée par mise en contact des grains de catalyseur avec un ou plusieurs matériaux d'enrobage qui sont introduits à l'état solide, contrairement à la plupart des procédés décrits dans l'art antérieur où l'enrobage du catalyseur se fait par mise en contact des grains avec le matériau à l'état fondu.

Cette seconde étape est effectuée à une température qui doit remplir deux critères.

En premier lieu, elle doit être supérieure ou égale à 40°C. Ceci garantit que la température est suffisamment élevée pour permettre un enrobage effectif des grains de catalyseur par le ou les matériau(x) d'enrobage.

En second lieu, elle doit être comprise dans la gamme allant de T - 60°C à T - 1°C, ce qui signifie qu'elle doit être inférieure (dans une gamme de 1 à 60°C), à la température T de fusion du ou des matériau(x) d'enrobage. Ces conditions permettent d'obtenir un enrobage optimal de la surface des grains de catalyseur.

De préférence, la seconde étape est effectuée à une température T allant de T - 50°C à T - 1°C (température inférieure, dans une gamme de 1 à 50°C, à la température T de fusion du ou des matériau(x) d'enrobage), et plus préférentiellement allant de T - 40°C à T - 5°C (température inférieure, dans une gamme de 5 à 40°C, à la température T de fusion du ou des matériau(x) d'enrobage).

Enfin, selon la présente invention la seconde étape est effectuée sans nouvel apport de chaleur.

Cela signifie qu'il n'y a pas de chauffage effectué au cours de cette étape, la chaleur nécessaire à l'obtention d'une température adéquate étant apportée uniquement par le catalyseur chaud directement issu de la première étape. Ainsi, le ou les matériaux d'enrobage se ramollissent par contact avec le catalyseur chaud issu de la première étape, et enrobent ainsi les grains.

La température de la seconde étape peut être ainsi contrôlée en ajustant l'un et/ou l'autre des paramètres suivants : la température du catalyseur entrant (et donc la température à laquelle a été effectuée la première étape), les quantités respectives de catalyseur et de matériau d'enrobage introduites, et la température du matériau d'enrobage lors de son introduction.

Comme exposé ci-avant, les matériaux d'enrobage employés dans la présente invention présentent un point de fusion supérieur ou égal à 45°C.

Par « point de fusion », on désigne la température de fusion à pression atmosphérique desdits matériaux.

De manière connue en soi, le point de fusion des matériaux d'enrobage peut être mesuré à l'aide d'un calorimètre à balayage différentiel (D.S.C), tel que le calorimètre vendu sous la dénomination DSC 30 par la société METTLER, avec une montée en température de 5 ou 10°C par minute. Le point de fusion considéré est le point correspondant à la température du pic le plus endotherme du thermogramme.

De préférence, le ou les matériaux d'enrobage employés présentent un point de fusion allant de 45 à 180°C, de préférence de 50 à 130°C.

Des matériaux d'enrobage convenant tout particulièrement à la mise en oeuvre du procédé selon l'invention sont choisis parmi les cires minérales, les cires synthétiques, les cires naturelles, les acides gras solides à température ambiante (23°C), les polymères ayant un point de fusion T allant de 45 à 180°C, et leurs mélanges.

Par « cires minérales », on désigne en particulier les cires paraffiniques telles que celles issues du raffinage des produits pétroliers.

Parmi les cires synthétiques, on peut citer notamment les cires paraffiniques synthétiques comme les cires de polyéthylène.

Par « cires naturelles », on désigne en particulier les cires animales et les cires végétales. Des cires végétales appropriées sont par exemple la cire d'abeille, la cire de carnauba.

Parmi les acides gras solides à température ambiante (23°C) on peut citer en particulier l'acide stéarique et l'acide palmitique.

Les polymères susceptibles d'être employés ont de préférence un point de fusion T allant de 50 à 130°C. Ils peuvent être en particulier choisis parmi les polyéthylènes et les polypropylènes.

On préfère en particulier employer des polyéthylènes, et notamment les cires de polyéthylène.

Selon un mode de réalisation préféré de l'invention, le matériau d'enrobage est sous la forme de particules. Ces particules ont un diamètre moyen en nombre inférieur ou égal à 200 $\mu$m, de préférence inférieur ou égal à 150 $\mu$m, plus préférentiellement inférieur ou égal à 50 $\mu$m, et mieux encore inférieur ou égal à 10 $\mu$m.

Selon un mode de réalisation particulièrement préféré, le matériau d'enrobage se présente sous forme de particules dont le diamètre moyen en nombre est inférieur ou égal à 3% du diamètre moyen en nombre des grains de catalyseur.

Le diamètre moyen en nombre des grains de catalyseur peut être déterminé par des méthodes bien connues de l'homme du métier, et notamment par vidéo-granulométrie.

Le diamètre moyen en nombre des particules de matériau d'enrobage peut être déterminé par une méthode de granulométrie par diffraction laser, telle que définie selon la norme ISO 13320 :2009.

Selon la présente invention, la quantité totale de matériau d'enrobage employé au cours de la seconde étape peut notamment varier de 0,05 à 5% en poids, de préférence de 0,1 à 3% en poids, et de manière encore plus préférée de 0,3 à 1% en poids, par rapport au poids total du catalyseur enrobé.

Par poids total du catalyseur enrobé, on désigne ici le poids du catalyseur obtenu in fine, c'est-à-dire recouvert par la couche de matériau d'enrobage à l'issue de la seconde étape.

Comme exposé ci-avant, la deuxième étape consiste à effectuer un enrobage des grains de catalyseur, c'est-à-dire qu'elle consiste à recouvrir les grains à leur surface d'une couche du ou des matériau(x) d'enrobage.

Cette couche de matériau d'enrobage n'a pas besoin d'être parfaitement homogène (notamment, d'épaisseur identique sur tous les grains et à la surface de chaque grain).

Il importe surtout qu'elle soit la plus fine possible, et qu'elle reste superficielle c'est-à-dire que le matériau d'enrobage ne pénètre pas dans les pores du catalyseur.

De préférence, la seconde étape consiste à recouvrir les grains à leur surface d'une couche du ou des matériau(x) d'enrobage dont l'épaisseur moyenne va de 0,01 à 15 $\mu$m. Plus préférentiellement, l'épaisseur moyenne de la couche de matériau d'enrobage va de 0,01 à 10 $\mu$m, plus préférentiellement de 0,02 à 5 $\mu$m, encore plus préférentiellement de 0,05 à 4 $\mu$m, et mieux encore de 1 à 3,5 $\mu$m.

L'un des avantages particulièrement notables du procédé selon l'invention est qu'il permet l'obtention de couches particulièrement fines de matériau d'enrobage à la surface des grains de catalyseur.

L'épaisseur moyenne de la couche de matériau d'enrobage recouvrant les grains de catalyseur peut être déterminée par microscopie électronique à balayage.

Cette épaisseur peut être contrôlée en ajustant les paramètres de la deuxième étape, notamment la quantité de matériau d'enrobage ajoutée par rapport à la quantité de grains de catalyseur, ainsi que la température à laquelle est effectuée cette seconde étape.

A l'issue de la seconde étape, les grains de catalyseur peuvent être séchés si nécessaire, par exemple à l'air libre ou en présence d'un flux gazeux d'air ou de tout autre gaz approprié, à température modérée de manière à ne pas altérer la fine couche d'enrobage.

La dé-protection des particules de catalyseur s'effectue de préférence une fois que celles-ci ont été chargées dans le réacteur dans lequel elles sont employées.

Elle est effectuée en plaçant le catalyseur dans des conditions dans lesquelles la couche de matériau présente à la surface des particules s'élimine.

De manière particulièrement préférée, le ou les matériau(x) d'enrobage sont choisis de telle sorte qu'il(s) s'élimine(nt) spontanément au contact de la charge lors du démarrage du réacteur dans lequel est mis en oeuvre le catalyseur. Ce mode de réalisation permet de réaliser, de manière particulièrement simple et économique, la dé-protection du catalyseur au moment du démarrage du réacteur.

Les exemples qui suivent sont donnés à titre purement illustratif de la présente invention.

EXEMPLES

Méthodologie employée pour la caractérisation des catalyseurs :

Les propriétés de résistance mécanique des catalyseurs A à H décrits dans les exemples ci-après ont été évaluées suivant un test de détermination de l'attrition du catalyseur, qui caractérise sa résistance aux chocs.

Ce paramètre a été déterminé sur des échantillons de 50 g de catalyseur, selon le principe exposé dans la norme ASTM D-4058, et qui consiste à placer un échantillon de catalyseur dans un tambour cylindrique muni sur sa génératrice d'un releveur (plaque de tôle soudée sur la paroi interne du tambour), puis après fermeture du tambour à l'aide d'un couvercle, à mettre l'ensemble en rotation pendant une durée de 30 minutes, puis à mesurer la perte en poids subie par l'échantillon de catalyseur, par tamisage sur un tamis n°20 (0.85 mm) afin d'éliminer les fines produites. Le pourcentage en poids de fines produites est ensuite calculé.

Ce test permet de simuler des chutes successives des particules de catalyseur, qui génèrent de la casse et des fines.

En outre, l'activité en hydrodésulfuration des catalyseurs A, B, G et H a été déterminée dans une unité pilote.

La charge utilisée est un gazole "straight run", qui présente les caractéristiques suivantes :

| Teneur en soufre (ppm en poids) | 11600 |
|---|---|
| Teneur en azote (ppm en poids) | 199 |
| Densité (g/mL) | 0,859 |

Pour chaque échantillon, le volume de catalyseur employé pour le test est de 10mL.

Avant le test d'hydrodésulfuration proprement dit, chaque échantillon de catalyseur a été activé par sulfuration après une période de mouillage de 3 heures à température ambiante par le gazole, additivé de 2,5% en poids de soufre par du disulfure de diméthyle (DMDS). La procédure de sulfuration a été effectuée avec une vitesse volumique horaire (VVH) de 3h$^{-1}$, un rapport $H_2$/gazole additivé de 200 (NL/h)/(L/h) et une pression totale de 3MPa (30 bars). Une première rampe de température de 20°C à 250°C a été effectuée avec une progression de 30°C/h, suivie d'un palier de 8h à 250°C. Une deuxième rampe de température de 250°C à 320°C a ensuite été effectuée à 20°C/h, suivie d'un palier de 5h à 320°C.

La charge de test a alors été injectée pour démarrer le test proprement dit. Les conditions de test étaient les suivantes : pression de 4 MPa (40 bars), rapport $H_2$/gazole de 300, VVH = 2h$^{-1}$, température de 340 à 350°C.

La teneur en soufre de la charge a été mesurée en sortie d'unité au moyen d'un analyseur par fluorescence UV. Les constantes apparentes de la réaction de désulfuration ont été calculées selon la formule E1 ci-après :

$$K_v = \left( \frac{1}{\alpha - 1} \right) \left( \frac{1}{S^{\alpha-1}} - \frac{1}{S_0^{\alpha-1}} \right) * VVH \qquad (E1)$$

avec

$K_v$ = constante apparente de réaction
$\alpha$ = ordre de la réaction (considéré égal à 1,2)
$S$ = teneur en soufre des effluents

$S_0$ = teneur en soufre de la charge

VVH = vitesse volumique horaire de la charge liquide

Les performances de chaque échantillon ont été évaluées par rapport à celle d'un catalyseur de référence. Pour cela, l'activité relative volumique (notée RVA pour "Relative Volume Activity") a été calculée selon la formule E2 suivante :

$$RVA = \frac{Kv(\acute{e}chantillon)}{Kv(r\acute{e}f\acute{e}rence)} \times 100 \qquad (E2)$$

Comme référence, a été attribuée la valeur $K_v$ de 100 au catalyseur A non enrobé.

Enfin, la formation de poussières par les catalyseurs A à H a été déterminée selon la description de la norme DIN 55992-1, de la manière suivante :

L'appareil employé est constitué d'un cylindre rotatif équipé d'un releveur (plaque de tôle soudée sur la paroi interne du tambour) permettant de produire des chutes répétées et générer ainsi de la poussière. Lorsque le cylindre est en rotation, celui-ci est balayé par un courant d'air à un débit donné, qui permet d'entraîner les poussières. Ce flux d'air passe au travers d'un long tube en verre qui permet de garder uniquement les plus fines particules, les plus grosses se déposant au fond du tube. Le flux d'air est alors dirigé à travers un filtre à poussière pour collecter toutes les particules en suspension. Contrairement au test d'attrition qui mesure toutes les particules inférieures à 0,85 mm, ce test permet de ne quantifier que les particules nocives par inhalation qui sont aussi celles qui restent le plus longtemps en suspension dans l'air. Leur taille est généralement inférieure à $10\mu m$.

Pour quantifier la formation de poussière, trois mesures sont effectuées au minimum. Une analyse nécessite 100 g (+/- 1g) de catalyseur, qui doit être pesé précisément à 10 mg près. Le filtre à poussière doit être pesé à 1 mg près avant d'être installé sur l'appareil. Le catalyseur est alors chargé dans le cylindre, et l'appareil mis en route à une vitesse de rotation du cylindre de 30 tr/min, un débit d'air de 20L/min pendant 5 min. A la fin de la mesure, le filtre est pesé précisément (+/- 1 mg). La différence de masse avant et après la mesure donne directement la masse de poussière générée pour 100g de catalyseur.

Les exemples ci-après ont été réalisés à partir d'un catalyseur de référence désigné catalyseur A.

Le catalyseur A est un catalyseur commercial d'hydrotraitement régénéré, qui contient 20% en poids de $MoO_3$, et 5% en poids de $CoO$ sur support d'alumine, et qui se présente sous forme d'extrudés de forme cylindrique ayant un diamètre moyen en nombre de 1,3 mm et une longueur moyenne en nombre de 3,2 mm

Le catalyseur A présente une attrition de 1,8%, une génération de poussières fines PM10 de 21 mg/100g et une activité RVA = 100 %.

Exemple 1 comparatif : (étape 1 seule, non conforme à l'invention)

Le catalyseur A a été traité de la manière suivante :

1 kg du catalyseur est placé dans un tambour en inox ayant un volume de 3 litres, à une vitesse de rotation de 4 tours / minute. Un flux d'air chaud est alors dirigé sur le catalyseur pour porter sa température à 140°C, pour simuler une étape de séchage/activation ou une sortie de traitement de régénération, pendant 30 min, puis le flux d'air est arrêté et le catalyseur est laissé à refroidir jusqu'à la température ambiante. Le catalyseur ainsi obtenu est désigné catalyseur B.

Le catalyseur B présente une attrition de 1,9%, une génération de poussières fines PM10 de 22 mg/100g et une activité RVA = 101 %.

Cet exemple montre que l'étape 1, bien que nécessaire par la suite pour l'apport de chaleur lors de l'étape 2, n'a pas en soi d'impact important sur l'attrition, les poussières et l'activité du catalyseur.

Exemple 2 comparatif : (étape 1 + étape 2 à froid, non conforme à l'invention)

Le catalyseur A a été traité de la manière suivante :

1 kg du catalyseur est placé dans un tambour en inox ayant un volume de 3 litres, à une vitesse de rotation de 4 tours / minute. Un flux d'air chaud est alors dirigé sur le catalyseur pour porter sa température à 140°C pour simuler une étape de séchage/activation ou une sortie de traitement de régénération.

Le lit de catalyseur est alors laissé à refroidir jusqu'à ce qu'il atteigne une température de 30°C, puis 5 g de cire synthétique micronisée (ayant une taille de particules de 5 $\mu$m, commercialisée sous la référence MP-620XXF par la société MicroPowders, point de fusion 115°C) ont été ajoutés dans le tambour. Le mélange est homogénéisé pendant 30 minutes, puis refroidi à température ambiante. Le mélange contenant encore des fines, celles-ci sont tamisées sur un tamis n°20 (0.85 mm) et on obtient le catalyseur C, non conforme à la présente invention.

L'analyse du catalyseur C montre qu'il contient moins de 0,1% en poids de carbone ce qui correspond à moins de 0,1% en poids de cire.

Par observation au microscope électronique à balayage, les grains du catalyseur C n'ont pas ou très peu de cire à leur surface (non mesurable).

Le catalyseur C présente une attrition de 1.8% et une génération de poussières fines PM10 de 19 mg/100g.

Cet exemple montre que la gamme de température revendiquée au titre de l'invention est importante, et que les effets recherchés ne sont pas obtenus à 30°C pour une cire de point de fusion de 115°C.

Exemple 3 comparatif : (étape 1 + étape 2 au-dessus point de fusion, non conforme à l'invention)

Le catalyseur A a été traité de la manière suivante :

1 kg du catalyseur est placé dans un tambour en inox ayant un volume de 3 litres, à une vitesse de rotation de 4 tours / minute. Un flux d'air chaud est alors dirigé sur le catalyseur pour porter sa température à 140°C, pour simuler une étape de séchage/activation ou une sortie de traitement de régénération, pendant 30 min, puis le flux d'air est arrêté.

Sans attendre que le lit de catalyseur ne refroidisse, 5 g de cire synthétique micronisée (ayant une taille de particules de 5 $\mu$m, commercialisée sous la référence MP-620XXF par la société MicroPowders, point de fusion 115°C) ont été immédiatement ajoutés dans le tambour à 140°C. Le mélange est ainsi homogénéisé pendant 30 minutes, puis refroidi à température ambiante pour obtenir le catalyseur enrobé D, non conforme à la présente invention.

L'analyse du catalyseur D montre qu'il contient 0,4% en poids de carbone ce qui correspond à 0,5% en poids de cire.

Les grains du catalyseur D, tels qu'observés par microscopie électronique à balayage, ne sont pas recouverts à leur surface par une véritable couche de cire, celle-ci étant au moins en partie présente dans la porosité.

Le catalyseur D présente une attrition de 0.9% et une génération de poussières fines PM10 de 9 mg/100g.

Cet exemple montre lui aussi que la gamme de température revendiquée au titre de l'invention est importante, et que les effets recherchés ne sont pas obtenus lorsque la seconde étape est effectuée à une température supérieure au point de fusion T du matériau d'enrobage (ici à 140°C, pour une cire ayant un point de fusion de 115°C).

Exemple 4 : (conforme à l'invention)

Le catalyseur A a été traité de la manière suivante :

1 kg du catalyseur est placé dans un tambour en inox ayant un volume de 3 litres, à une vitesse de rotation de 4 tours / minute. Un flux d'air chaud est alors dirigé sur le catalyseur pour porter sa température à 140°C pour simuler une étape de séchage/activation ou une sortie de traitement de régénération.

Le lit de catalyseur est alors laissé à refroidir jusqu'à ce qu'il atteigne une température de 80°C, puis 15 g de cire synthétique (ayant une taille de particules de 150 $\mu$m en moyenne, point de fusion 115°C) ont été ajoutés dans le tambour. Le mélange est homogénéisé pendant 60 minutes, puis refroidi à température ambiante. Le mélange contenant encore des fines, celles-ci sont tamisées sur un tamis n°20 (0.85 mm) et on obtient le catalyseur E, conforme à la présente invention.

L'analyse du catalyseur E montre qu'il contient 0,3% en poids de carbone ce qui correspond à 0,4% en poids de cire.

Le catalyseur E présente une attrition de 0,6 % et une génération de poussières fines PM10 de 4 mg/100g.

Ces valeurs sont très inférieures à celles obtenues pour le catalyseur A de référence, et pour les catalyseurs comparatifs B, C, D, et F.

Exemple 5 comparatif : (étape 1 + étape 2 au-dessus point de fusion, non conforme à l'invention)

Le catalyseur A a été traité de la manière suivante :

1 kg du catalyseur est placé dans un tambour en inox ayant un volume de 3 litres, à une vitesse de rotation de 4 tours / minute. Un flux d'air chaud est alors dirigé sur le catalyseur pour porter sa température à 190°C, pour simuler une étape de séchage/activation ou une sortie de traitement de régénération, pendant 30 min, puis le flux d'air est arrêté.

Sans attendre que le lit de catalyseur ne refroidisse, 5 g de cire synthétique (ayant une taille de particules de 150 $\mu$m en moyenne, point de fusion 115°C) ont été immédiatement ajoutés dans le tambour à 190°C. Le mélange est ainsi homogénéisé pendant 30 minutes, puis refroidi à température ambiante pour obtenir le catalyseur enrobé F, non conforme à la présente invention.
L'analyse du catalyseur F montre qu'il contient 0,4% en poids de carbone ce qui correspond à 0,5% en poids de cire.
Les grains du catalyseur F, tels qu'observés par microscopie électronique à balayage, ne sont pas recouverts à leur surface par une véritable couche de cire, celle-ci étant au moins en partie présente dans la porosité.
Le catalyseur F présente une attrition de 1,1 % et une génération de poussières fines PM10 de 11 mg/100g.
Cet exemple montre à nouveau que l'utilisation lors de la seconde étape d'une température supérieure au point de fusion du matériau d'enrobage, ne permet pas d'obtenir les effets souhaités.

Exemple 6 : (conforme à l'invention)

Le catalyseur A a été traité de la manière suivante :

1 kg du catalyseur est placé dans un tambour en inox ayant un volume de 3 litres, à une vitesse de rotation de 4 tours / minute. Un flux d'air chaud est alors dirigé sur le catalyseur pour porter sa température à 140°C pour simuler une étape de séchage/activation ou une sortie de traitement de régénération.

Le lit de catalyseur est alors laissé à refroidir jusqu'à ce qu'il atteigne une température de 80°C, puis 20 g de cire synthétique micronisée (ayant une taille de particules de 5 $\mu$m, commercialisée sous la référence MP-620XXF par la société MicroPowders, point de fusion 115°C) ont été ajoutés dans le tambour. Le mélange est homogénéisé pendant 30 minutes, puis refroidi à température ambiante pour obtenir le catalyseur enrobé G, conforme à la présente invention.
L'analyse du catalyseur G montre qu'il contient 1,7% en poids de carbone ce qui correspond à 2% en poids de cire.
Les grains du catalyseur G sont recouverts d'une couche de cire, dont l'épaisseur moyenne, mesurée par microscopie électronique à balayage, est de 12 $\mu$m en moyenne.
Le catalyseur G présente une attrition de 0.2%, une génération de poussières fines PM10 de moins de 0,1 mg/100g et une activité RVA = 95 %.
Cet exemple montre que les effets recherchés (diminution de l'attrition et surtout de la génération de poussière) sont obtenus en employant le procédé selon l'invention, avec un taux de cire de 2% en poids.
Cette quantité de cire induit cependant un léger déficit au niveau de l'activité RVA, il reste donc préférable de mettre en oeuvre l'invention avec une teneur plus faible en matériau d'enrobage.
Par ailleurs, les effets recherchés en termes de diminution de l'attrition et de la génération de poussières fines, sont atteints de manière particulièrement satisfaisante. Cet exemple illustre les bénéfices supplémentaires apportés par le procédé selon l'invention, en employant à la seconde étape un matériau d'enrobage sous forme de particules de très petite taille.

Exemple 7 : (conforme à l'invention)

Le catalyseur A a été traité de la manière suivante :

1 kg du catalyseur est placé dans un tambour en inox ayant un volume de 3 litres, à une vitesse de rotation de 4 tours / minute. Un flux d'air chaud est alors dirigé sur le catalyseur pour porter sa température à 140°C pour simuler une étape de séchage/activation ou une sortie de traitement de régénération.

Le lit de catalyseur est alors laissé à refroidir jusqu'à ce qu'il atteigne une température de 80°C, puis 5 g de cire synthétique micronisée (ayant une taille de particules de 5 $\mu$m, commercialisée sous la référence MP-620XXF par la société MicroPowders, point de fusion 115°C) ont été ajoutés dans le tambour. Le mélange est homogénéisé pendant 30 minutes, puis refroidi à température ambiante pour obtenir le catalyseur enrobé H, conforme à la présente invention.

L'analyse du catalyseur H montre qu'il contient 0,4% en poids de carbone ce qui correspond à 0,5% en poids de cire.

Les grains du catalyseur H sont recouverts d'une fine couche de cire, dont l'épaisseur moyenne, mesurée par microscopie électronique à balayage, est de 3 $\mu$m en moyenne.

Le catalyseur H présente une attrition de 0.3%, une génération de poussières fines PM10 de moins de 0,1 mg/100g et une activité RVA = 99 %.

Dans cet exemple, les effets recherchés, à savoir une forte diminution de l'attrition et de la génération de poussières fines, tout en conservant autant que possible un bon niveau d'activité, sont atteints de manière encore améliorée. A cet égard, les résultats obtenus sont, de manière surprenante, particulièrement bons.

Cet exemple illustre l'intérêt d'une part d'employer un matériau d'enrobage sous forme de particules de très petite taille, et d'autre part d'utiliser une quantité la plus faible possible de matériau d'enrobage, de manière à obtenir une couche la plus fine possible.

De manière surprenante, malgré la très faible épaisseur de sa couche de cire, le catalyseur H selon l'invention présente une attrition faible, et génère particulièrement peu de poussières fines.

**Revendications**

1. Procédé pour limiter l'émission de poussières à partir de grains de catalyseurs, comprenant les deux étapes consécutives suivantes :

   - une première étape consistant à effectuer un traitement thermique des grains de catalyseur à une température supérieure ou égale à 100°C, suivie de
   - une seconde étape consistant à effectuer un enrobage de la surface des grains de catalyseur, par mise en contact de ceux-ci avec un ou plusieurs matériaux d'enrobage ayant un point de fusion T supérieur ou égal à 45°C et qui sont introduits à l'état solide,

   ladite seconde étape étant effectuée sans nouvel apport de chaleur, à une température allant de T - 60°C à T - 1°C, tout en restant supérieure ou égale à 40°C.

2. Procédé selon la revendication 1, **caractérisé en ce qu'**il est effectué en continu.

3. Procédé selon l'une quelconque des revendications précédentes, **caractérisé en ce que** ladite seconde étape est effectuée sur un lit mobile non chauffé, alimenté en continu par le catalyseur directement issu de la première étape d'une part, et par le ou les matériau(x) d'enrobage d'autre part.

4. Procédé selon l'une quelconque des revendications précédentes, **caractérisé en ce que** la première étape est effectuée à une température allant de 120 à 650°C, de préférence de 150 à 550°C, et mieux encore de 200 à 500°C.

5. Procédé selon l'une quelconque des revendications précédentes, **caractérisé en ce que** la première étape est choisie parmi un traitement de séchage du catalyseur, un traitement de calcination du catalyseur, un traitement de régénération du catalyseur.

6. Procédé selon l'une quelconque des revendications précédentes, **caractérisé en ce que** la seconde étape est effectuée à une température T allant de T - 50°C à T - 1°C, de préférence allant de T - 40°C à T - 5°C.

7. Procédé selon l'une quelconque des revendications précédentes, **caractérisé en ce que** le ou les matériaux d'enrobage employés à la seconde étape ont un point de fusion T allant de 45 à 180°C, de préférence de 50 à 130°C.

8. Procédé selon l'une quelconque des revendications précédentes, **caractérisé en ce que** le matériau d'enrobage est choisi parmi les cires minérales, les cires synthétiques, les cires naturelles, les acides gras solides à température ambiante, les polymères ayant un point de fusion T allant de 45 à 180°C, et leurs mélanges.

9. Procédé selon la revendication précédente, **caractérisé en ce que** le matériau d'enrobage est choisi parmi les polymères ayant un point de fusion T allant de 50 à 130°C, et de préférence parmi les polyéthylènes, et tout particulièrement parmi les cires de polyéthylène.

**10.** Procédé selon l'une quelconque des revendications précédentes, **caractérisé en ce que** le matériau d'enrobage se présente sous forme de particules dont le diamètre moyen en nombre est inférieur ou égal à 3% du diamètre moyen en nombre des grains de catalyseur.

**11.** Procédé selon l'une quelconque des revendications précédentes, **caractérisé en ce que** la quantité totale de matériau d'enrobage employé au cours de la seconde étape va de 0,05 à 5% en poids, de préférence de 0,1 à 3% en poids, et de manière encore plus préférée de 0,3 à 1% en poids par rapport au poids total du catalyseur enrobé.

**12.** Procédé selon l'une quelconque des revendications précédentes, **caractérisé en ce que** la seconde étape consiste à recouvrir les grains à leur surface d'une couche du ou des matériau(x) d'enrobage dont l'épaisseur moyenne va de 0,01 à 15 μm.

**13.** Procédé selon la revendication précédente, **caractérisé en ce que** l'épaisseur moyenne de la couche de matériau d'enrobage va de 0,01 à 10 μm, de préférence de 0,02 à 5 μm, plus préférentiellement de 0,05 à 4 μm, et mieux encore de 1 à 3,5 μm.

**14.** Procédé selon l'une quelconque des revendications précédentes, **caractérisé en ce que** le catalyseur est un catalyseur d'hydroconversion d'hydrocarbures, comprenant un support poreux d'oxyde réfractaire sur lequel est déposé au moins un métal choisi parmi les métaux du groupe VIII et les métaux du groupe VIB.

**15.** Procédé selon la revendication précédente, **caractérisé en ce que** le support du catalyseur est choisi parmi les alumines, les silices, les silice-alumines amorphes ou cristallisées, et de préférence est un support contenant au moins 30% en poids d'alumine, et plus préférentiellement au moins 50% en poids d'alumine.

**16.** Procédé selon l'une quelconque des revendications 14 et 15, **caractérisé en ce que** le catalyseur est choisi parmi les catalyseurs contenant les associations métalliques CoMo, NiMo, NiW, NiCoMo, déposées sur des supports à base d'alumine.

**17.** Procédé selon l'une quelconque des revendications précédentes, **caractérisé en ce que** les grains de catalyseur présentent une dimension moyenne maximale en nombre allant de 1 à 10 mm, de préférence de 2 à 5 mm.

**Patentansprüche**

**1.** Verfahren zur Begrenzung der Emission von Staub aus Katalysatorkörnern, das die folgenden zwei aufeinanderfolgenden Schritte umfasst:

- einen ersten Schritt, der darin besteht, dass man eine thermische Behandlung der Katalysatorkörner bei einer Temperatur größer oder gleich 100 °C durchführt, gefolgt von
- einem zweiten Schritt, der darin besteht, dass man eine Beschichtung der Oberfläche der Katalysatorkörner durch Inberührungbringen der Körner mit einem oder mehreren Beschichtungsmaterialien, die einen Schmelzpunkt T größer oder gleich 45 °C aufweisen und in festem Zustand eingetragen werden, durchführt,

wobei man den zweiten Schritt ohne erneuten Wärmeeintrag bei einer Temperatur, die im Bereich von T - 60 °C bis T - 1 °C liegt und dabei größer oder gleich 40 °C bleibt, durchführt.

**2.** Verfahren nach Anspruch 1, **dadurch gekennzeichnet, dass** man es kontinuierlich durchführt.

**3.** Verfahren nach einem der vorhergehenden Ansprüche, **dadurch gekennzeichnet, dass** man den zweiten Schritt an einem unbeheizten Fließbett durchführt, dem kontinuierlich direkt aus dem ersten Schritt stammender Katalysator einerseits und das Beschichtungsmaterial bzw. die Beschichtungsmaterialien andererseits zugeführt werden.

**4.** Verfahren nach einem der vorhergehenden Ansprüche, **dadurch gekennzeichnet, dass** man den ersten Schritt bei einer Temperatur im Bereich von 120 bis 650 °C, vorzugsweise von 150 bis 550 °C und noch besser von 200 bis 500 °C durchführt.

**5.** Verfahren nach einem der vorhergehenden Ansprüche, **dadurch gekennzeichnet, dass** man den ersten Schritt aus einer Katalysatortrocknungsbehandlung, einer Katalysatorcalcinierungsbehandlung und einer Katalysatorregenerationsbehandlung auswählt.

**6.** Verfahren nach einem der vorhergehenden Ansprüche, **dadurch gekennzeichnet, dass** man den zweiten Schritt bei einer Temperatur T im Bereich von T - 50 °C bis T - 1 °C und vorzugsweise im Bereich von T - 40 °C bis T - 5 °C durchführt.

**7.** Verfahren nach einem der vorhergehenden Ansprüche, **dadurch gekennzeichnet, dass** das Beschichtungsmaterial bzw. die Beschichtungsmaterialien, die im zweiten Schritt eingesetzt werden, einen Schmelzpunkt T im Bereich von 45 bis 180 °C und vorzugsweise von 50 bis 130 °C aufweisen.

**8.** Verfahren nach einem der vorhergehenden Ansprüche, **dadurch gekennzeichnet, dass** man das Beschichtungsmaterial aus mineralischen Wachsen, synthetischen Wachsen, natürlichen Wachsen, bei Umgebungstemperatur festen Fettsäuren, Polymeren mit einem Schmelzpunkt T im Bereich von 45 bis 180 °C und Mischungen davon auswählt.

**9.** Verfahren nach dem vorhergehenden Anspruch, **dadurch gekennzeichnet, dass** man das Beschichtungsmaterial aus Polymeren mit einem Schmelzpunkt T im Bereich von 50 bis 130 °C und vorzugsweise aus Polyethylenen und ganz speziell aus Polyethylenwachsen auswählt.

**10.** Verfahren nach einem der vorhergehenden Ansprüche, **dadurch gekennzeichnet, dass** das Beschichtungsmaterial in Form von Teilchen vorliegt, deren zahlenmittlerer Durchmesser kleiner oder gleich 3 % des zahlenmittleren Durchmessers der Katalysatorkörner ist.

**11.** Verfahren nach einem der vorhergehenden Ansprüche, **dadurch gekennzeichnet, dass** die im zweiten Schritt eingesetzte Gesamtmenge an Beschichtungsmaterial 0,05 bis 5 Gew.-%, vorzugsweise 0,1 bis 3 Gew.-% und noch weiter bevorzugt 0,3 bis 1 Gew.-%, bezogen auf das Gesamtgewicht des beschichteten Katalysators, beträgt.

**12.** Verfahren nach einem der vorhergehenden Ansprüche, **dadurch gekennzeichnet, dass** der zweite Schritt darin besteht, dass man die Körner an ihrer Oberfläche mit einer Schicht des Beschichtungsmaterials bzw. der Beschichtungsmaterialien, deren mittlere Dicke im Bereich von 0,01 bis 15 $\mu$m liegt, bedeckt.

**13.** Verfahren nach dem vorhergehenden Anspruch, **dadurch gekennzeichnet, dass** die mittlere Dicke der Schicht des Beschichtungsmaterials im Bereich von 0,01 bis 10 $\mu$m, vorzugsweise von 0,02 bis 5 $\mu$m, weiter bevorzugt von 0,05 bis 4 $\mu$m und noch besser von 1 bis 3,5 $\mu$m liegt.

**14.** Verfahren nach einem der vorhergehenden Ansprüche, **dadurch gekennzeichnet, dass** es sich bei dem Katalysator um einen Katalysator zur Hydrokonversion von Kohlenwasserstoffen handelt, der einen porösen Feuerfestoxidträger umfasst, auf dem mindestens ein Metall, das aus Metallen der Gruppe VIII und Metallen der Gruppe VIB ausgewählt ist, abgeschieden ist.

**15.** Verfahren nach dem vorhergehenden Anspruch, **dadurch gekennzeichnet, dass** der Katalysatorträger aus amorphen oder kristallinen Aluminiumoxiden, Siliciumdioxiden oder Siliciumdioxid-Aluminiumoxiden ausgewählt ist und vorzugsweise ein Träger ist, der mindestens 30 Gew.-% Aluminiumoxid und weiter bevorzugt mindestens 50 Gew.-% Aluminiumoxid enthält.

**16.** Verfahren nach einem der Ansprüche 14 und 15, **dadurch gekennzeichnet, dass** der Katalysator aus den Katalysatoren, die auf Trägern auf Basis von Aluminiumoxid abgeschiedenen Metallkombinationen CoMo, NiMo, NiW oder NiCoMo enthalten, ausgewählt ist.

**17.** Verfahren nach einem der vorhergehenden Ansprüche, **dadurch gekennzeichnet, dass** die Katalysatorkörner eine maximale zahlenmittlere Abmessung im Bereich von 1 bis 10 mm und vorzugsweise von 2 bis 5 mm aufweisen.

**Claims**

**1.** A process for limiting the emission of dust from catalyst grains comprising the following two consecutive steps:

- a first step consisting in carrying out a heat treatment of the catalyst grains at a temperature greater than or equal to 100°C, followed by
- a second step that consists in carrying out a coating of the surface of the catalyst grains, by placing these grains in contact with one or more coating materials having a melting point T greater than or equal to 45°C and which are introduced in the solid state,

said second step being carried out without any fresh supply of heat, at a temperature ranging from T - 60°C to T - 1°C, while remaining greater than or equal to 40°C.

2. The process as claimed in claim 1, **characterized in that** it is carried out continuously.

3. The process as claimed in either one of the preceding claims, **characterized in that** said second step is carried out on an unheated moving bed, fed continuously by the catalyst directly derived from the first step on the one hand, and by the coating material(s) on the other hand.

4. The process as claimed in any one of the preceding claims, **characterized in that** the first step is carried out at a temperature ranging from 120°C to 650°C, preferably from 150°C to 550°C, and better still from 200°C to 500°C.

5. The process as claimed in any one of the preceding claims, **characterized in that** the first step is selected from a catalyst drying treatment, a catalyst calcination treatment and a catalyst regeneration treatment.

6. The process as claimed in any one of the preceding claims, **characterized in that** the second step is carried out at a temperature T ranging from T - 50°C to T - 1°C, preferably ranging from T - 40°C to T - 5°C.

7. The process as claimed in any one of the preceding claims, **characterized in that** the coating material(s) used in the second step have a melting point T ranging from 45°C to 180°C, preferably from 50°C to 130°C.

8. The process as claimed in any one of the preceding claims, **characterized in that** the coating material is selected from mineral waxes, synthetic waxes, natural waxes, fatty acids that are solid at ambient temperature, polymers having a melting point T ranging from 45°C to 180°C, and mixtures thereof.

9. The process as claimed in the preceding claim, **characterized in that** the coating material is selected from polymers having a melting point T ranging from 50°C to 130°C, and preferably from polyethylenes, and very particularly from polyethylene waxes.

10. The process as claimed in any one of the preceding claims, **characterized in that** the coating material is in the form of particles, the number-average diameter of which is less than or equal to 3% of the number-average diameter of the catalyst grains.

11. The process as claimed in any one of the preceding claims, **characterized in that** the total amount of coating material used during the second step ranges from 0.05% to 5% by weight, preferably from 0.1% to 3% by weight, and more preferably still from 0.3% to 1% by weight relative to the total weight of the coated catalyst.

12. The process as claimed in any one of the preceding claims, **characterized in that** the second step consists in covering the grains at their surface with a layer of the coating material(s), the mean thickness of which ranges from 0.01 to 15 $\mu$m.

13. The process as claimed in the preceding claim, **characterized in that** the mean thickness of the layer of coating material ranges from 0.01 to 10 $\mu$m, preferably from 0.02 to 5 $\mu$m, more preferentially from 0.05 to 4 $\mu$m, and better still from 1 to 3.5 $\mu$m.

14. The process as claimed in any one of the preceding claims, **characterized in that** the catalyst is a hydrocarbon hydroconversion catalyst, comprising a porous refractory oxide support deposited on which is at least one metal selected from group VIII metals and group VIB metals.

15. The process as claimed in the preceding claim, **characterized in that** the catalyst support is selected from amorphous or crystalline aluminas, silicas or silica-aluminas, and is preferably a support containing at least 30% by weight of alumina, and more preferentially at least 50% by weight of alumina.

16. The process as claimed in either one of claims 14 and 15, **characterized in that** the catalyst is selected from the catalysts containing the metallic combinations CoMo, NiMo, NiW or NiCoMo, deposited on alumina-based supports.

17. The process as claimed in any one of the preceding claims, **characterized in that** the catalyst grains have a maximum number-average dimension ranging from 1 to 10 mm, preferably from 2 to 5 mm.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2976253 A
- EP 2000206 A
- US 4526877 A
- US 5302566 A
- EP 0897748 A